Europäisches Patentamt

European Patent Office

Office européen des brevets

(11) Veröffentlichungsnummer: **0 453 613 A1**

(12) **EUROPÄISCHE PATENTANMELDUNG**

(21) Anmeldenummer: **90108121.6**

(22) Anmeldetag: **27.04.90**

(51) Int. Cl.⁵: **F02F 3/26, F02B 23/06**

(43) Veröffentlichungstag der Anmeldung:
**30.10.91 Patentblatt 91/44**

(84) Benannte Vertragsstaaten:
**AT CH DE ES FR GB IT LI**

(71) Anmelder: **SO "DVIGATELOSTROENE"**
**Bul. Karl Marx 267**
**BG-9013 Varna(BG)**

(72) Erfinder: **Todorov Kolev, Nikola, Dipl.-Ing.**
**Komplex Tschajka, Block 11-2, App. 21**
**Varna(BG)**

Erfinder: **Ivanov Stojanov, Hristo, Dipl.-Ing.**
**ul. Ilinden 31**
**Varna(BG)**
Erfinder: **Jordanov Ivanov, Zonjo, Dipl.-Ing.**
**ul. Pleven 3, Bl.Perischtiza, Eing.E**
**Russe(BG)**

(74) Vertreter: **Finck, Dieter et al**
**Patentanwälte v. Füner, Ebbinghaus, Finck**
**Mariahilfplatz 2 & 3**
**W-8000 München 90(DE)**

(54) **Im Kolben eines mit direkter Einspritzung arbeitenden Dieselmotors vorgesehener Mittenbrennraum.**

(57) Zur Erzielung einer optimalen Verbrennung mit geringer Rußbildung und einer niedrigen Konzentration an giftigen Abgaskomponenten wird ein Mittenbrennraum im Kolben eines mit direkter Einspritzung arbeitenden Dieselmotors vorgeschlagen, der einen zylindrischen Abschnitt (1) mit einem Durchmesser von 0,4 bis 0,45 D und einer Höhe von 0,02 bis 0,025 D aufweist, wenn der Außendurchmesser D des Kolbens als Bezugsgröße dient, wobei sein unterer Rand (3) von der Stirnseite (5) des Kolbens einen Abstand (4) von 0,03 bis 0,035 D hat. An den oberen Rand des zylindrischen Abschnitts (1) schließt sich ein sich zur Stirnseite (5) des Kolbens hin konisch erweiternder Außenabschnitt (6) an, dessen Mantellinien mit der Stirnfläche (5) des Kolbens einen Winkel (α) von 10° bis 12° bilden. Vom unteren Rand (3) des zylindrischen Abschnitts (1) aus erstreckt sich ein sich konisch in Richtung des Bodens (9) des Kolbens erweiternder Innenabschnitt (7), dessen Mantellinien mit der Stirnfläche (5) des Kolbens oder dazu parallelen Ebenen einen Winkel (β) von 55° bis 60° bilden. Der Innenabschnitt (7) geht über einen kontinuierlich verlaufenden fließenden Übergangsabschnitt (8) in den Boden (9) über, der die Form der Oberfläche einer Kugel mit einem Radius von 1,45 bis 1,5 D hat. Der Abstand (10) des Bodens (9) von der Stirnfläche (5) des Kolbens längs der zentralen Achse (11) des Mittenbrennraums beträgt 0,25 bis 0,28 D.

Die Erfindung betrifft einen im Kolben eines mit direkter Einspritzung arbeitenden Dieselmotors vorgesehenen Mittenbrennraum mit einem zylindrischen Abschnitt, mit einem Boden, mit einem Außenabschnitt, der sich von dem einen Rand des zylindrischen Abschnitts aus sich konisch erweiternd zur Stirnseite des Kolbens erstreckt, mit einem Innenabschnitt, der sich von dem anderen Rand des zylindrischen Abschnitts aus sich konisch erweiternd in Richtung des Bodens des Kolbens erstreckt und mit einem kontinuierlich verlaufenden fließenden Übergangsabschnitt zwischen dem bodenseitigen Ende des Innenabschnitts und dem Boden.

Bei einer solchen Ausgestaltung eines Mittenbrennraums, wie sie aus der SU-A 822 766 bekannt ist, schneiden sich die Mantellinien des konischen Außenabschnitts und des konischen Innenabschnitts unter einem Winkel von 70° bis 90°. Der Abstand zwischen dem unteren Rand des zylindrischen Abschnitts und der Kolbenstirnseite beträgt 20% der Gesamthöhe des Mittenbrennraums. Dabei ist der Boden des Mittenbrennraums eben und seitlich über Ausrundungen mit dem unteren konischen Innenabschnitt verbunden.

Es hat sich gezeigt, daß bei dieser Ausgestaltung des Mittenbrennraums die Verbrennung unzureichend ist und in den Abgasen Ruß und giftige Komponenten in hoher Konzentration enthalten sind.

Die der Erfindung zugrunde liegende Aufgabe besteht nun darin, den Mittenbrennraum der gattungsgemäßen Art so auszugestalten, daß eine Kraftstoffverbrennung mit sehr geringer Rußbildung und sehr niedrigen Anteilen an giftigen Komponenten bei hohem Wirkungsgrad erreichbar ist.

Diese Aufgabe wird ausgehend von dem Mittenbrennraum der gattungsgemäßen Art erfindungsgemäß dadurch gelöst, daß bezogen auf den Außendurchmesser D des Kolbens als Bezugsgröße die Mantellinien des Außenabschnitts mit der Stirnfläche des Kolbens einen Winkel von 10° bis 12° bilden, die Mantellinien des Innenabschnitts mit der Stirnfläche des Kolbens einen Winkel von 55° bis 60° bilden, der zylindrische Abschnitt einen Durchmesser von 0,4 bis 0,45 D und eine Höhe von 0,02 bis 0,025 D hat und sein anderer Rand von der Stirnseite des Kolbens einen Abstand von 0,03 bis 0,035 D hat und der Boden die Form der Oberfläche einer Kugel mit einem Radius von 1,45 bis 1,5 D hat, wobei der Abstand des Bodens von der Stirnfläche des Kolbens längs der zentralen Achse des Mittenbrennraums 0,25 bis 0,28 D beträgt.

Bei dem erfindungsgemäß ausgestalteten Mittenbrennraum stellen sich Strömungsverhältnisse ein, die eine günstige Gemischbildung und eine sehr gute Verbrennung gewährleisten, so daß der Anteil der in den Abgasen vorhandenen giftigen Komponenten und von bei der Verbrennung gebildetem Ruß sehr gering ist, der Gesamtwirkungsgrad der Verbrennung sehr günstig ist und die thermische Belastung im Bereich des zylindrischen Abschnitts reduziert ist.

Anhand einer Zeichnung, die die Ausgestaltung des Mittenbrennraums im Axialschnitt zeigt, wird die Erfindung näher erläutert.

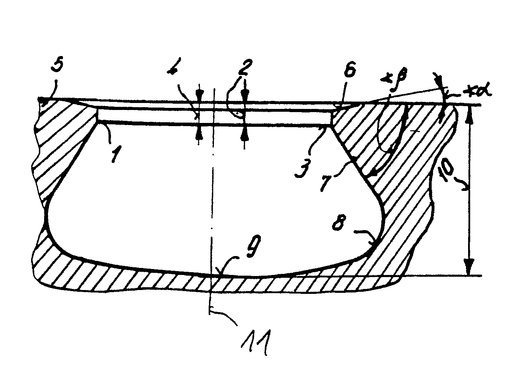

Der in einem Kolben eines mit direkter Einspritzung arbeitenden Dieselmotors vorgesehene Mittenbrennraum hat einen zylindrischen Abschnitt 1 mit einem Durchmesser von 0,4 bis 0,45 D und mit einer Höhe 2 von 0,02 bis 0,025 D, wenn D der Außendurchmesser des Kolbens ist. Der zylindrische Abschnitt 1 hat in der Zeichnung einen unteren Rand 3, der zur Stirnseite 5 des Kolbens einen Abstand 4 hat, der 0,03 bis 0,35 D beträgt. Der zylindrische Abschnitt 1 hat in der Zeichnung einen oberen Rand, von dem aus sich ein sich konisch erweiternder Außenabschnitt 6 zur Stirnseite 5 des Kolbens hin erstreckt. Die Mantellinien des sich konisch erweiternden Außenabschnitts 6 schließen mit der Stirnseite 5 des Kolbens einen Winkel α von 10° bis 12° ein. Vom unteren Rand 3 des zylindrischen Abschnitts 1 erstreckt sich ein sich konisch erweiternder Innenabschnitt 7 in Richtung des Bodens 9, dessen Mantellinien mit der Stirnseite 5 des Kolbens oder dazu parallelen Ebenen einen Winkel β von 50° bis 60° einschließen. Der sich konisch erweiternde Innenabschnitt 7 geht in einen kontinuierlich verlaufenden fließenden Übergangsabschnitt 8 über, der allseits stetig in den Boden 9 des Mittenbrennraums übergeht. Der Boden 9 des Mittenbrennraums hat die Form der Oberfläche einer Kugel mit einem Radius von 1,45 bis 1,5 D. Der Abstand 10 bzw. die Tiefe des Bodens 9 bis zur Stirnseite 5 des Kolbens längs der zentralen Achse 11 des Mittenbrennraums beträgt 0,25 bis 0,28 D.

Wenn der Kolben des Dieselmotors seinen Verdichtungshub ausführt, wird die im Verbrennungsraum vorhandene, zu verdichtende Luft durch den zylindrischen Abschnitt 1 in den Innenraum des Mittenbrennraums eingeführt. Dabei kann sich ein ungestörter Luftstrom in Form eines tangentialen Wirbels um die zentrale Achse 11 des Mittenbrennraums ausbilden, was sowohl die Gemischbildung mit dem eingespritzen Kraftstoff als auch die Verbrennung äußerst günstig ablaufen läßt. Beim Austritt des verbrennenden Gemisches und der Abgase durch den zylindrischen Abschnitt 1 des Mittenbrennraums sorgt die Form des sich konisch erweiternden Außenabschnitts 6 für eine Richtungsänderung des Abgasstromwirbels im Bereich des oberen Randes des zylindrischen Abschnitts 1, wodurch die thermische Belastung und dadurch bedingte Spannungen im zylindrischen Abschnitt 1 reduziert werden.

**Patentansprüche**

1. Im Kolben eines mit direkter Einspritzung arbeitenden Dieselmotors vorgesehener Mittenbrennraum
   - mit einem zylindrischen Abschnitt (1),
   - mit einem Boden (9),
   - mit einem Außenabschnitt (6), der sich von dem einen Rand des zylindrischen Abschnitts (1) aus sich konisch erweiternd zur Stirnseite (5) des Kolbens erstreckt,
   - mit einem Innenabschnitt (7), der sich von dem anderen Rand (3) des zylindrischen Abschnitts (1) aus sich konisch erweiternd in Richtung des Bodens (9) des Kolbens erstreckt und
   - mit einem kontinuierlich verlaufenden fließenden Übergangsabschnitt (8) zwischen dem bodenseitigen Ende des Innenabschnitts (7) und dem Boden (9),
   dadurch **gekennzeichnet,** daß bezogen auf den Außendurchmesser D des Kolbens als Bezugsgröße
   - die Mantellinien des Außenabschnitts (6) mit der Stirnfläche (5) des Kolbens einen Winkel ($\alpha$) von 10° bis 12° bilden,
   - die Mantellinien des Innenabschnitts (7) mit der Stirnfläche (5) des Kolbens einen Winkel ($\beta$) von 55° bis 60° bilden,
   - der zylindrische Abschnitt (1) einen Durchmesser von 0,4 bis 0,45 D und eine Höhe (2) von 0,02 bis 0,025 D hat und sein anderer Rand (3) von der Stirnseite des Kolbens einen Abstand (4) von 0,03 bis 0,035 D hat und
   - der Boden (9) die Form der Oberfläche einer Kugel mit einem Radius von 1,45 bis 1,5 D hat, wobei der Abstand (10) des Bodens (9) von der Stirnfläche (5) des Kolbens längs der zentralen Achse (11) des Mittenbrennraums 0,25 bis 0,28 D beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 134 181 (DAIMLER BENZ)<br>* das ganze Dokument *<br>– – – | patentan, spruch | F 02 F 3/26<br>F 02 B 23/06 |
| A | GB-A-2 097 472 (KATAEV)<br>* Seite 3, Zeile 1 - Seite 3, Zeile 116 *<br>– – – | patentan, spruch | |
| A | DE-A-3 510 076 (KHD)<br>* Seite 14, Absatz 2 - Seite 14, Absatz 2; Figur 1 *<br>– – – – – | patentan, spruch | |

| RECHERCHIERTE SACHGEBIETE (Int. Cl.5) |
|---|
| F 02 F<br>F 02 B |

Der vorliegende Recherchenbericht wurde für alle Patentansprüche erstellt

| Recherchenort | Abschlußdatum der Recherche | Prüfer |
|---|---|---|
| Den Haag | 13 November 90 | WASSENAAR G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
----------------------------------------------------------------
& : Mitglied der gleichen Patentfamilie, übereinstimmendes Dokument